# EUROPÄISCHE PATENTANMELDUNG

(11) **EP 4 778 742 A1**
(43) Veröffentlichungstag der Anmeldung: **22.07.2026**
(21) Anmeldenummer: 26152873.1
(22) Anmeldetag: 20.01.2026
(51) Int. Cl.: B60G 15/06, B60G 17/027

(54) **FUSSPUNKTVERSTELLEINRICHTUNG MIT AKTOREN, FEDERBEIN UND ANORDNUNG**

(30) Priorität: 20.01.2025 DE 102025101863
(71) Anmelder: Vibracoustic SE, 69469 Weinheim (DE)
(72) Erfinder: Altinoluk, Ersan, Hamburg (DE); Bulling, Dieter, Wedemark (DE); Volkmann, Sebastian, Vögelsen (DE)
(74) Vertreter: Patentanwälte Olbricht Buchhold Keulertz

(57) **Zusammenfassung**

Vorgeschlagen wir eine Fußpunktverstelleinrichtung (2), die von einer Dämpferlängsachse (Z2) durchsetzbar ist, umfassend einen ersten Aktuator (10) mit einer ersten Aktuatorlängsachse (Z10) und einen zweiten Aktuator (20) mit einer zweiten Aktuatorlängsachse (Z20).

## Beschreibung

Die Erfindung betrifft eine Fußpunktverstelleinrichtung mit mehreren Aktoren gemäß Anspruch 1 und ein Federbein sowie eine Anordnung.

Fußpunktverstelleinrichtungen für Federbeine sind aus der Praxis bekannt. Die Fußpunktverstelleinrichtung dient der Höhenverstellung eines Federtellers, an dem sich eine Feder des Federbeins abstützt. Die Höhenverstellung erfolgt vermittels eines einzigen Aktors, der in Bezug zu einem eingesetzten Dämpfer des Federbeins umfangseitig oder aber auch seitlich angeordnet ist. Ist kein Dämpfer vorhanden, ist der einzelne Aktuator regelmäßig in der Art zur Feder angeordnet, dass Feder und Aktuator in etwa die gleiche Zentrallängsachse aufweisen.

MacPherson Federbeine sind ebenfalls bekannt. Sie umfassen in der Regel einen ortsfest mit einem Radträger verbundenen Dämpfer, welcher in engem Abstand am Reifen und dessen Felge seitlich verortet ist. Am Dämpferrohr ist der Federteller ortsfest montiert. Die Feder stützt sich zwischen dem Federteller und einem Federbeindom an der Karoserie ab, wobei ein Rotationsfreiheitsgrad am Federdom, beispielsweise durch ein Axiallager, vorgesehen ist.

Bisher bekannte Fußpunktverstelleinrichtung sind aufgrund ihrer raumfüllenden Bauart nicht geeignet, um bei den beengten Platzverhältnissen von MacPherson Federbeinen eingesetzt zu werden. Ferner können aufgrund des einen einzigen Aktors nachteilige Kippmomente entstehen, wenn dieser seitlich des Dämpfers angeordnet ist. Zudem sind bekannte Fußpunktverstelleinrichtungen bezüglich der Lastverteilung verbesserungswürdig.

Aufgabe der Erfindung ist daher die entsprechende Verbesserung des Stands der Technik.

Erfindungsgemäße Merkmale sind in Anspruch 1 und 12 angegeben. Ausgestaltungen sind Gegenstand der Offenbarung, insbesondere der Ansprüche 2 bis 11.

Erfindungsgemäß wird eine Fußpunktverstelleinrichtung vorgeschlagen, die von einer Dämpferlängsachse durchsetzbar ist, umfassend einen ersten Aktuator mit einer ersten Aktuatorlängsachse und einen zweiten Aktuator mit einer zweiten Aktuatorlängsachse.

Die Erfindung kann auch auf eine Anordnung lauten, umfassend die offenbarungsgemäße Fußpunktverstelleinrichtung und den/einen Dämpfer. Es ist somit eine Fußpunktverstelleinrichtung geschaffen, die anstelle eines einzigen raumgreifenden und einen Dämpfer außenumfangsseitig umgreifenden Aktuators zwei Aktuatoren vorsieht. Die beiden Aktuatoren können neben einem Dämpfer angeordnet oder anordenbar sein, anstatt ihn außenumfangsseitig zu umgreifen. Der Dämpfer kann außerhalb der Aktuatoren angeordnet sein. Durch die Anordnung zweier Aktuatoren, wird damit nicht nur ein kompakter Gesamtaufbau möglich. Die vorgeschlagene Fußpunktverstelleinrichtung ist auch umsetzbar ohne, dass die Kosten gegenüber einem einzelnen aber größeren und komplexeren Aktuator signifikant steigen. Der Fußpunkt ist ein gemeinsamer Fußpunkt der beiden Aktuatoren.

Die Fußpunktverstelleinrichtung kann für ein Federbein sein. Die Fußpunktverstelleinrichtung ermöglicht eine Verstellung des Fußpunktes ohne Gefahr zu laufen, dass eine Bauraumkollision mit einem Reifen und/oder einer Felge eintritt. Dabei kann die Fußpunktverstellung fest mit dem Dämpfer verbunden sein. Der Dämpfer kann fest mit einem Radträger verbunden sein. Somit kann die Fußpunktverstelleinrichtung fest zum Radträger festgelegt sein, so dass sich beide gemeinsam beim Lenken oder bei vergleichbaren Rotationsbewegungen bewegen können. Dieses verhindert eine Bauraumkollision zwischen der Fußpunktverstelleinrichtung und dem Reifen und/oder einer Felge zuverlässig.

Durch die Verwendung von zwei Aktuatoren, die neben einem Dämpfer angeordnet werden können, werden auf den einzelnen Aktuator wirkende Kippmomente reduziert, vergleichen mit einem einzigen Aktuator. Dadurch können die beiden Aktuatoren jeweils kleiner gestaltet werden.

Zudem ist der notwendige Stelldruck mit zwei Aktuatoren reduzierbar, da bei gegebener Fahrzeuglast der notwendige Druck mit abnehmender Projektionsfläche steigt. Ein geringerer Druck wiederum führt zu einem robusteren System oder kostengünstiger ausführbaren Bälgen, deren Berstdruck geringer ausfällt, verglichen mit einem System, das einen einzigen statt zwei Aktuatoren gleicher Größe einsetzen. Alternativ brauchen die zwei Aktuatoren bei gleichem verwendeten Druck jeweils nur die Hälfte der Projektionsfläche eines einzelnen Aktuators aufweisen, was zu einer deutlich schlankeren Bauform führt. Gerade solch eine schlanke Bauform der zwei Aktuatoren ermöglicht es, die schwierigen Bauraumanforderungen des MacPherson-Federbeins zu erfüllen.

Denkbar ist daher, dass jeder der beiden Aktuatoren radial benachbart zum Dämpfer (bzw. nicht vom Dämpfer durchragt / nicht außenumfangsseitig um den Dämpfer herum) angeordnet ist. Das führt zu einer schlanken Bauform der Aktuatoren, denn der Aktuator muss keinen inneren Bauraum für den Dämpfer freihalten. Der Außendurchmesser zumindest eines Aktuators, vorzugsweise von beiden Aktuatoren, beträgt höchstens dem dreifachen Außendurchmesser des Dämpfers auf Höhe der Aktuatoren, vorzugsweise höchstens dem zweifachen Außendurchmesser, weiter bevorzugt höchstens dem eineinhalbfachen Außendurchmesser.

Der erste Aktuator und der zweite Aktuator sind separate Aktuatoren. Die Dämpferlängsachse kann sich parallel zur Verstellrichtung der Fußpunktverstelleinrichtung erstrecken. Dadurch ist ein Bauraumbedarf insgesamt reduzierbar.

Die beiden Aktuatoren können hydraulische Aktuatoren sein. Bei den beiden Aktuatoren kann jeweils mittels eines Balgs ein volumenvariabler Fluidraum geschaffen sein, welcher die Ansteuerung einer definierten Zielhöhe ermöglicht. Jeder der beiden Aktuatoren kann ein Gehäuse und/oder ein Stützrohr umfassen. Jeder der beiden Aktuatoren kann eine Anbindungsplatte umfassen, die über eine Verstellplatte miteinander verbunden sein können. Die Verstellplatte kann entlang der Dämpferlängsachse verstellbar sein. Jeder der beiden Aktuatoren kann an einer Fixierplatte befestigt sein. Die Fixierplatte kann am Dämpfer fest fixiert sein oder bezüglich des Dämpfer fest fixiert sein. Die Verhindert ein ungewollten Verdrehen um die Dämpferlängsachse. Jeder Aktuator kann einen Balg, vorzugsweise einen Rollbalg, umfassen. Jeder Balg kann einen Fluidraum begrenzen. Jeder Fluidraum kann begrenzt sein ausschließlich von der Anbindungsplatte und/oder Verstellplatte, der Fixierplatte und/oder dem Abrollkolben und dem Balg. Jeder Balg kann einends vermittels einer ersten Balgbefestigung an der Anbindungsplatte und/oder der Verstellplatte und/oder dem Stützrohr befestigt sein. Jeder Balg kann anderenends vermittels einer zweiten Balgbefestigung an der Fixierplatte und/oder dem Abrollkolben und/oder dem Stützrohr befestigt sein. Jeder Balg kann eine Rollfalte und/oder eine stationäre Falte ausbilden. Jeder der beiden Aktuatoren kann einen Abrollkolben umfassen, auf dem der jeweilige Balg abrollt. Der Abrollkolben kann an der Fixierplatte befestigt sein. Jeder der beiden Aktuatoren kann ein Ventil zum Be- und Entfüllen des Fluidraums umfassen. Die Balgbefestigungen können einen Spannring umfassen, der den Balg festlegt.

Das Federbein kann ein MacPherson Federbein sein. Das Federbein kann einen Dämpfer, eine Feder und einen Federteller umfassen. Der Dämpfer kann mit einem Radträger verbunden oder verbindbar sein. An den Dämpfer kann ein Radträger angebaut oder anbaubar sein. Am Dämpfer kann der Federteller angeordnet sein. Die Feder kann sich zwischen dem Federteller und einem Federbeindom an einer Karoserie abstützen. Sofern sich die Offenbarung auf "Dämpfer" bezieht, kann damit der Dämpfer des Federbeins gemeint sein. Die Feder kann eine Schraubenfeder sein. Das Federbein kann das Rad (Reifen und Felge) führen - im Gegensatz zu sog. "Feder-Dämpfer-Einheiten", die mitunter als "Federbein" bezeichnet werden, aber im Unterschied zu Federbeinen, insb. nach MacPherson, das Rad nicht führen.

Weiterbildungsgemäß können die beiden Aktuatorlängsachsen parallel zueinander angeordnet sein. Dadurch können beide Aktuatoren gemeinsam eine Verstellrichtung der Fußpunktverstelleinrichtung definieren. Die beiden Aktuatorlängsachsen können zudem beide bezüglich der Dämpferlängsachse radial versetzt angeordnet sein. Bevorzugt verlaufen beide Aktuatorlängsachsen und die Dämpferlängsachse parallel zueinander.

Ausgestaltungsgemäß können die beiden Aktuatorlängsachsen diametral bezüglich der Dämpferlängsachse angeordnet sein. Dadurch kann eine gleichmäßige Fußpunktverstelleinrichtung geschaffen werden.

Ausgestaltungsgemäß können die beiden Aktuatorlängsachsen und die Dämpferlängsachse im Querschnitt ein Dreieck aufspannen. Die beiden Dreiecksseiten zwischen jeweils einer der Dämpferlängsachsen und der Aktuatorlängsachse können miteinander einen Winkel einschließen im Bereich von 179° bis 160°. Dadurch können die beiden Aktuatoren zu bezüglich eines Reifens und/oder einer Felge weiter beabstandet werden. Es kann ein größerer Radialfreiraum geschaffen werden. Der Reifen und/oder die Felge kann dem Dreieck diametral bezüglich der Dämpferlängsachse gegenüberliegen.

Weiterbildungsgemäß können die beiden Aktuatoren einen Radialabstand zueinander aufweisen. Die beiden Aktuatoren können einen Zwischenraum ausbilden. Im Zwischenraum kann ein Dämpfer angeordnet sein. Die Aktuatoren sind gegenüber dem Stand der Technik einfacher aufzubauen, da der Dämpfer neben den Aktuatoren vorbeigeführt werden kann. Damit entfällt die komplexe Notwendigkeit der bisher erforderlichen Abdichtung des Fluidraumes des Aktuators gegenüber dem Dämpfer, der den Aktuator durchragt. Jeder Aktuator kann ein separates Gehäuse aufweisen. Der Radialabstand kann der geringste Abstand zwischen den Aktuatoren oder Gehäusen sein.

Ausgestaltungsgemäß können die beiden Aktuatoren parallelgeschaltet sein. Dadurch können sie gemeinsam wirken. Die Parallelschaltung kann durch eine Fixierplatte und eine Verstellplatte konstruktiv erwirkt werden. Zwischen den Platten können die Aktuatoren angeordnet und dadurch zwangsgekoppelt sein.

Weiterbildungsgemäß können die beiden Aktuatoren mit einer Fixierplatte verbunden sein, vorzugsweise ist die Fixierplatte an einem Dämpfer befestigt oder befestigbar. Die Fußpunktverstelleinrichtung umfasst die Fixierplatte. Die beiden Aktuatoren stützen sich gegen die Fixierplatte ab. Die Fixierplatte kann eine gemeinsame Fixierplatte für die beiden Aktuatoren sein. Dadurch lässt sich eine Bauteilanzahl und Kippmomente reduzieren.

Weiterbildungsgemäß können die beiden Aktuatoren mit einer Verstellplatte verbunden sein, vorzugsweise ist die Verstellplatte an einem Dämpfer entlang der Dämpferlängsachse verstellbar geführt oder verstellbar führbar. Die Fußpunktverstelleinrichtung umfasst die Verstellplatte. Die beiden Aktuatoren stützen sich gegen die Verstellplatte ab. Die Verstellplatte kann eine gemeinsame Verstellplatte für die beiden Aktuatoren sein. Dadurch lässt sich eine Bauteilanzahl und Kippmomente reduzieren. Ein Weiterer Vorteil besteht darin, dass die Verstellplatte die radiale Führung der Aktuatoren übernimmt, in dem sie sich am Dämpfer radial abstützt.

Ausgestaltungsgemäß kann die Verstellplatte fest mit einem Federteller verbunden sein. Die Verstellung der Verstellplatte durch die Aktuatoren führt dann auch unmittelbar zur Verstellung des Federtellers. An einer Verstellhülse können die Verstellplatte und der Federteller zur gemeinsamen Verstellung befestigt sein. Die Verstellhülse kann vom Dämpfer durchgriffen sein.

Ausgestaltungsgemäß kann die Verstellplatte ein Gleitmittel umfassen. Das Gleitmittel kann ein Lager sein. Das Gleitmittel kann die Verstellplatte am Dämpfer oder an einem den Dämpfer umgebenden Zentralführungselement entlang der Dämpferlängsachse gleitend lagern. Das Gleitmittel kann in einem Zylinderabschnitt der Verstellplatte angeordnet sein. Der Zylinderabschnitt verhindert ein Verkippen oder Verkanten der Verstellplatte.

Weiterbildungsgemäß kann an der Verstellplatte für jeden der beiden Aktuatoren jeweils eine Anbindungsplatte befestigt sein. Die Fußpunktverstelleinrichtung umfasst die Anbindungsplatten. Die Anbindungsplatten sind an der Verstellplatte befestigt und damit verstellbar. Dies ermöglicht eine Funktionstrennung im modularen Sinn. Während die Verstellplatte hauptsächlich der Führung während der Verstellung und der Übertragung der Verstellbewegung an den Federteller dient, können die Anbindungsplatten der Anbindung an die Bälge dienen. Die Verstellplatte kann somit ein Gleichteil sein, das für unterschiedlich ausgestaltete Bälge und Anbindungsplatten verwendet werden kann, während unterschiedlich ausgestaltete Bälge jeweils einer Anbindungsplatte zugeordnet sein können. Diese Anbindungsplatten können sich balgabhängig unterscheiden. Ferner können die Aktuatoren separat gefertigt werden, um anschließend zur Fußpunktverstelleinrichtung zusammen gesetzt zu werden. Die modulare Fertigung erlaubt die Verwendung von einfachen und kostengünstige Werkzeugen.

Weiterbildungsgemäß können die beiden Aktuatoren strukturell identisch sein. Durch identische Aktuatoren kann eine gleichmäßige Verstellung gewährleistet werden. Zudem wird durch die identische Ausführung die Gleichteileanzahl erhöht, was zu einer insgesamt kostengünstigen Baugruppe führt.

Weiterbildungsgemäß kann jeder der beiden Aktuatoren jeweils einen Balg umfassen, vorzugsweise einen einzigen Balg. Dadurch, dass der Fluidraum innenradial (bezogen auf die jeweilige Aktuatorlängsachse) nicht gegenüber dem Dämpfer abgedichtet werden muss, reicht ein einziger Balg je Aktuator aus. Der Balg kann den Fluidraum innen- und außenumfangsseitig begrenzen. Dabei kann der Balg den Fluidraum außenumfangseitig vollständig begrenzen. Der Balg kann den Fluidraum innenumfangseitig teilweise begrenzen, beispielsweise dort, wo er am Abrollkolben anliegt.

Ausgestaltungsgemäß kann die stationäre Falte des Balgs außenumfangsseitig um die erste Balgbefestigung herum angeordnet werden. Außenumfangsseitig der ersten Befestigung kann der Fluidraum angeordnet sein, sodass der Innendruck des Fluidraums auf die erste Befestigung drückt. Das führt zu einer besonders sicheren Verklemmung. Dies macht die Abdichtung besonders robust.

Ausgestaltungsgemäß kann ein Faltensitz je Aktuator vorgesehen sein, an dem die stationäre Falte anliegt. Die Faltensitze können von der jeweiligen Anbindungsplatte ausgebildet sein. Die Faltensitze können von der Verstellplatte ausgebildet sein. Durch das Anliegen der stationären Falte an dem Faltensitz wird die Stützkraft der Fußpunktverstelleinrichtung auch in den Faltensitz eingeleitet. Der Faltensitz kann eine Ringfläche umfassen. Die Ringfläche kann begrenzt sein (bezogen auf die jeweilige Aktuatorlängsachse) innenradial von der ersten Balgbefestigung und außenradial vom Kontaktende zwischen stationärer Falte und Verstellplatte oder Anbindungsplatte. Die Ringfläche kann eine gewölbte Ringfläche sein. Dadurch ist eine große Fläche zur Kraftübertragung geschaffen. Dieses führt zu einer vorteilhaften Druckverteilung in den Bauteilen und somit zu einer robusten Ausgestaltung.

Weiterbildungsgemäß kann jeder der beiden Aktuatoren jeweils ein Stützrohr umfassen, vorzugsweise ist der jeweilige Balg außenumfangseitig durch das jeweilige Stützrohr gestützt. Dadurch ist ein durchmesserweiterndes Aufblähen des Balgs verhindert. Das Stützrohr kann das Gehäuse des Aktuators sein.

Ausgestaltungsgemäß kann das Stützrohr an der Verstellplatte und/oder dem Balg und/oder der Anbindungsplatte befestigt sein. Das Stützrohr kann relativ zur Fixierplatte und/oder zum Abrollkolben verstellbar sein. Dadurch ist der außenumfangsseitige Schutz des Balgs unabhängig von der eingestellten Höhe der Fußpunktverstelleinrichtung.

Ausgestaltungsgemäß kann jeder der Bälge zumindest bereichsweise, vorzugsweise vollständig, einen Raum begrenzen, der mit einem inkompressiblem Flüssigkeit gefüllt ist/werden kann, bevorzugt weist die Flüssigkeit im Bereich von -30 °C bis +90 °C einen flüssigen Aggregatzustand auf. Der große Temperaturbereich des flüssigen Aggregatzustandes bringt ein korrespondierendes großes Einsatz-Temperaturintervall mit sich, welches die Anwendung in den meisten Kraftfahrzeugen erlaubt.

Weiterbildungsgemäß kann jeder der beiden Aktuatoren jeweils einen Abrollkolben umfassen, vorzugsweise bildet der jeweilige Abrollkolben mit dem entsprechenden Stützrohr eine Gleitlagerung aus. Das Stützrohr kann am Abrollkolben gleitgelagert sein. Hierdurch kann jeder Aktuator in Radialrichtung geführt sein. Das Stützrohr kann ein freies Ende aufweisen, in welches der Abrollkolben eintaucht, wobei Stützrohr und Abrollkolben zueinander gleitgelagert sein können. Dadurch ist eine sichere Positionierung des Stützrohrs gewährleistet.

Ausgestaltungsgemäß kann der Abrollkolben einen Bauchabschnitt aufweisen, dessen Außendurchmesser in einem Bereich, der entlang der jeweiligen Aktuatorlängsachse benachbart zur Rollfalte des entsprechenden Balgs verortet ist, größer ist als der Zenit der Rollfalte. Der Bauchabschnitt kann im Durchmesser so groß sein, dass das Stützrohr mit dem Bauchabschnitt eine lagernde Spielpassung ausbildet. Da das Stützrohr besonders kostengünstig ausgeführt werden kann, wenn sein freies Ende und der Abschnitt, in dem der Balg gestützt wird, den selben Durchmesser haben, ist es vorteilhaft, wenn der Bauchabschnitt in etwa den Innendurchmesser des Stützrohres aufweist, um das Gleitlager auszubilden.

Ausgestaltungsgemäß kann zumindest ein Endanschlag für die Aktuatoren vorgesehen sein. Jeder Aktuatoren kann einen Endanschlag umfassen. In der Position des Aktuators im Endanschlag kann zwischen dem Stützrohr und der Fixierplatte ein Abstand von höchsten 10 mm gegeben sein. Dadurch ist eine Minimalposition der Fußpunktverstelleinrichtung definiert, welche sicherstellt, dass das Stützrohr keine signifikanten Axialkräften ausgesetzt ist. Hierdurch können die Stützrohre dünnwandig und damit leicht und kostengünstig ausgeführt werden. Eine niedrigere Position kann die Fußpunktverstelleinrichtung nicht verwirklichen. Der Endanschlag kann von Anschlagsflächen des Abrollkolbens und der Anbindungsplatte ausgebildet sein. In der Position des Aktuators im Endanschlag können der Abrollkolben und die Anbindungsplatte aneinander anliegen.

Weiterbildungsgemäß kann die Fixierplatte fest mit dem Dämpfer verbunden sein. Der Dämpfer seinerseits kann fest mit dem Radträger verbunden sein. Dadurch wird eine ungewollte Rotation der beiden Aktuatoren um die Dämpferlängsachse und eine Kollision mit dem Reifen/der Felge verhindert. Die feste Verbindung kann mittelbar oder unmittelbar sein.

Ausgestaltungsgemäß kann die Fußpunktverstelleinrichtung ein Ventil und/oder einen Schlauchanschluss je Aktuator umfassen. Das Ventil und/oder der Schlauchanschluss kann fest an der Fixierplatte befestigt sein. Dadurch ist die Zuleitung keiner Bewegung unterworfen, die durch eine Verstellung der Fußpunktverstelleinrichtung erzeugt ist. Dies ist materialschonend.

Offenbart wird ferner ein Federbein mit einer Fußpunktverstelleinrichtung gemäß der Offenbarung, wobei die Aktuatoren radial benachbart bezüglich des Dämpfers angeordnet sind. Das Federbein kann eine MacPherson Federbein sein. Die bereits oben bezüglich der Fußpunktverstelleinrichtung beschriebenen Vorteile ergeben sich analog auch für das Federbein, worauf hiermit verwiesen wird.

Ausgestaltungsgemäß kann die Fußpunktverstelleinrichtung zur einen Seite eines Federtellers und eine Feder zur anderen Seite des Federtellers angeordnet sein. Die Fußpunktverstelleinrichtung kann unterhalb des Federtellers und in Horizontalrichtung neben dem Reifen/der Felge (jeweils bezogen auf eine Einbaulage im Kraftfahrzeug) bauraumsparend angeordnet werden.

Erfindungsgemäß wird ferner eine Anordnung vorgeschlagen, umfassend eine offenbarungsgemäße Fußpunktverstelleinrichtung und einen Reifen mit einer Seitenwand und eine Felge, wobei die beiden Aktuatoren und der Dämpfer radial benachbart zur Seitenwand und/oder Felge angeordnet sind, und jeweils einen Radialfreiraum zur Seitenwand und/oder Felge aufweisen von mindestens 10 mm, bevorzugt von mindestens 15 mm. Dadurch kann die Fußpunktverstelleinrichtung sehr nahe und bauraumnutzend an das Rad platziert werden. Die Radialfreiräume können unterschiedlich oder identisch sein.

Die bereits oben bezüglich der Fußpunktverstelleinrichtung und des Federbeins beschriebenen Vorteile ergeben sich analog auch für die Anordnung, worauf hiermit verwiesen wird. Die zwei einzelnen Aktuatoren können wenig komplex sein und neben dem Dämpfer derart platziert werden, dass der Bauraum in Richtung Radträger und/oder in Richtung Reifen/Felge nicht signifikant eingeschränkt wird. Dabei kann die Positionierung so erfolgen, dass ein Mindestabstand von 10 mm zwischen den Aktuatoren und Reifen/Felge eingehalten werden kann. Die Anordnung kann alternativ zur Fußpunktverstelleinrichtung ein offenbarungsgemäßes Federbein mit Fußpunktverstelleinrichtung umfassen. Der Radialfreiraum kann der geringste Abstand zwischen einerseits der Seitenwand und/oder Felge und andererseits dem entsprechenden Aktuator und/oder Dämpfer sein. Der Reifen ist auf eine Felge aufgezogen. Der Reifen und die Felge definieren ein Rad. Das Rad weist eine Drehachse auf, um welche es sich beim Abrollen dreht. Das Rad weist eine Lenkachse auf, um welche es sich bei Lenkung dreht. Der Radialfreiraum / geringste Abstand kann parallel zur Drehachse des Reifens sein. Denkbar ist, dass der Radialfreiraum zwischen einerseits der Seitenwand und/oder Felge und andererseits dem entsprechenden Aktuatoren größer ist als ein Radialfreiraum zwischen einerseits der Seitenwand und/oder Felge und andererseits dem Dämpfer. Dadurch können die beiden Aktuatoren zu bezüglich eines Reifens und/oder einer Felge weiter beabstandet werden. Es kann ein größerer Radialfreiraum geschaffen werden. Die Drehachse des Reifens und die Dämpferlängsachse können sich schneiden. Dies dient einer zentrierten Anordnung. Die Aktuatorlängsachsen können sich bezüglich der Drehachse des Reifens gegenüberliegen. Die Seitenwand ist der Fußpunktverstelleinrichtung zugewandt.

Offenbart ist eine Fußpunktverstelleinrichtung für ein (einziges) Federbein. Offenbart ist eine Anordnung, die eine (einzige) offenbarungsgemäße Fußpunktverstelleinrichtung umfasst.

Die Begriffe "radial benachbart", "neben" und "nebenan" können synonym verwendet werden. Die Begriffe "radial" und" Radialrichtung" beziehen sich auf eine oder mehrere offenbarte Achsen. Sollten Bauteile mehrfach offenbart sein, sollen Ausgestaltungen und Vorteile, die nur für eines der Bauteile beschrieben sind, gleichsam auch für die anderen entsprechenden Bauteile als in optionaler Weise offenbart gelten. Axial und Axialrichtung verlaufen parallel zur Längsachse. Radial und Radialrichtung verlaufen senkrecht zur Längsachse. Umfang und Umfangsrichtung verlaufen um die Längsachse herum. Die beschriebenen Vorteile ergeben sich insbesondere in den genannten Bereichsgrenzen, jedoch können die Vorteile auch jenseits einer oder beider konkreten Bereichsgrenzen vorliegen, wenn auch nur in abgeschwächter Ausprägung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht eines Federbeins,
- Fig. 2: einen Längsschnitt durch das Federbein der Fig. 1,
- Fig. 3: eine Montagestellung des Federbeins der Fig. 1 und
- Fig. 4: einen Querschnitt durch die Einbaulage des Federbeins der Fig. 3.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

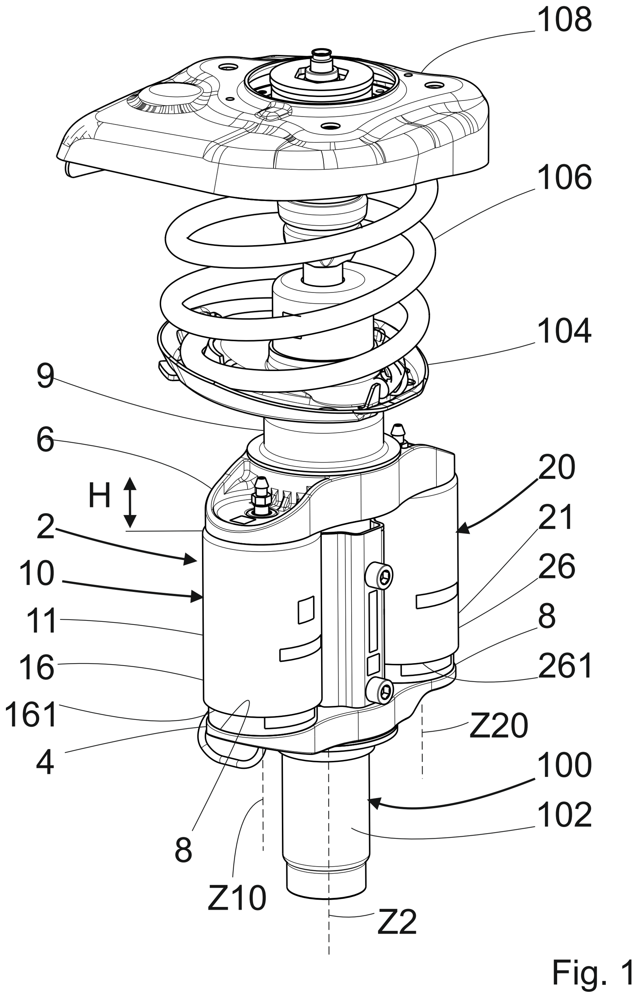

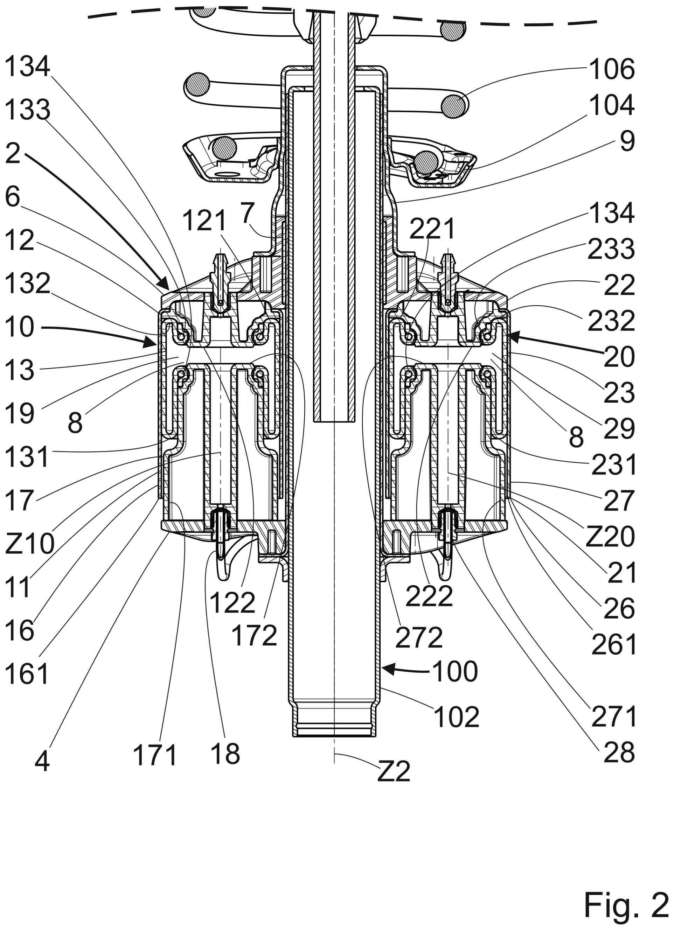

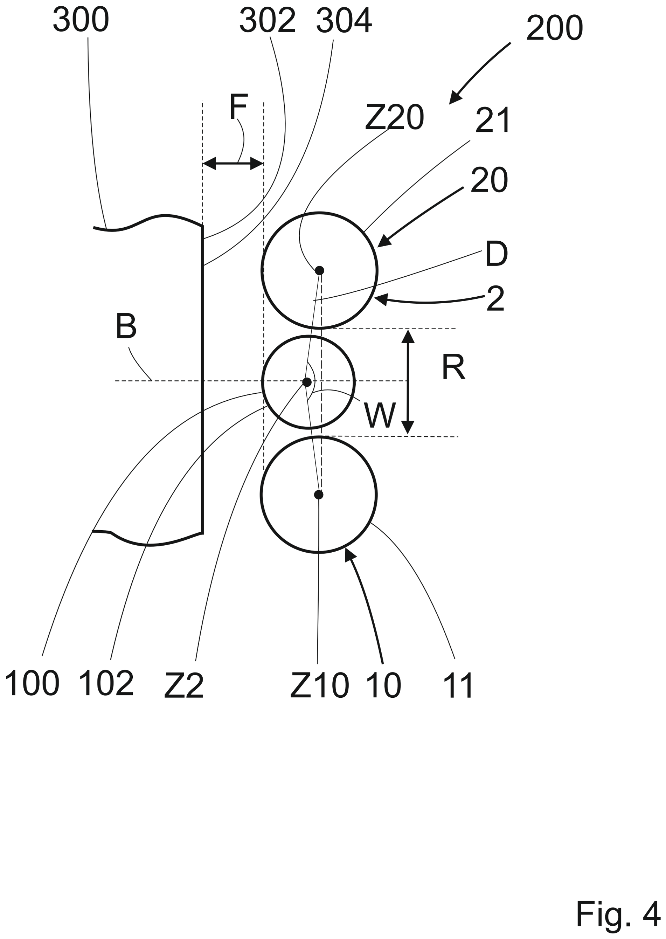

Die Figuren 1 bis 4 zeigen ein identisches Federbein 100. Das Federbein 100 ist ein MacPherson Federbein.

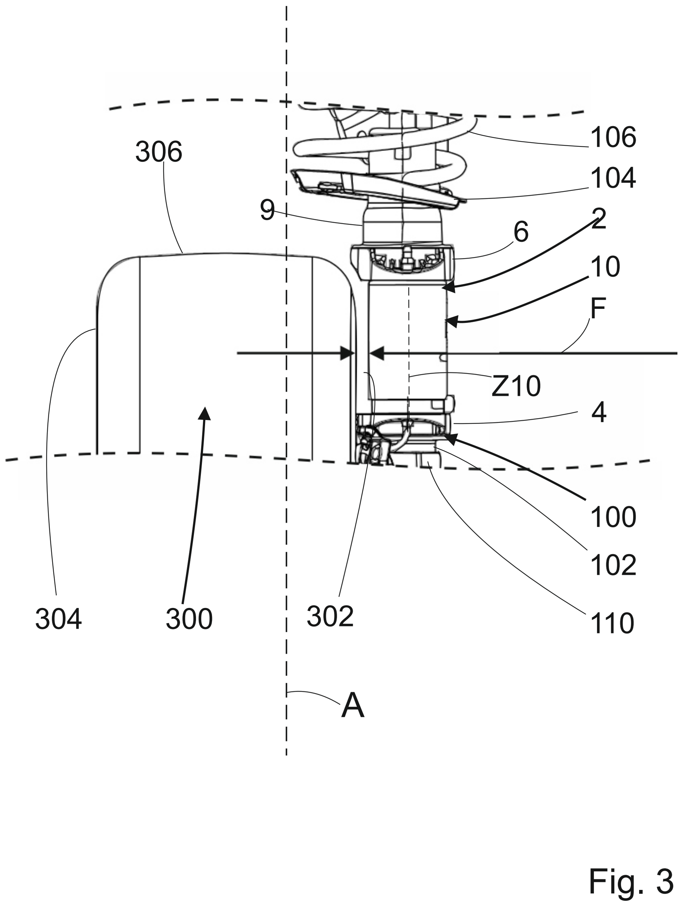

Das Federbein 100 umfasst einen Dämpfer 102, einen Federteller 104 und eine als Schraubenfeder ausgestaltete Feder 106. Fig. 1 zeigt zudem einen Federbeindom 108 einer Karoserie. Fig. 3 zeigt einen Radträger 110. Der Dämpfer 102 ist mit dem Radträger 110 MacPherson-typisch fest verbunden. Der Dämpfer 102 ist entlang seiner Längsrichtung von einer Dämpferlängsachse Z2 durchgriffen. Am Dämpfer 102 ist der Federteller 104 verschiebbar angeordnet. Die Feder 106 stützt sich zwischen dem Federteller 104 und dem Federbeindom 108 ab. Fig. 3 zeigt ferner einen Reifen 300 mit einer Seitenwand 302. Der Reifen 300 ist auf eine Felge 304 aufgezogen und um eine Lenkachse A lenkbar, sowie um eine Drehachse B drehbar. Reifen 300 und Felge 304 definieren ein Rad. Das Federbein 100 führt das Rad.

Das Federbein 100 umfasst zudem eine einzige Fußpunktverstelleinrichtung 2. Die Fußpunktverstelleinrichtung 2 ist von der Dämpferlängsachse Z2 durchsetzt. Sie umfasst einen ersten Aktuator 10 mit einer ersten Aktuatorlängsachse Z10 und einen zweiten Aktuator 20 mit einer zweiten Aktuatorlängsachse Z20. Der erste Aktuator 10 und der zweite Aktuator 20 sind separate Aktuatoren. Die Dämpferlängsachse Z2 erstreckt sich parallel zur Verstellrichtung der Fußpunktverstelleinrichtung 2. Die beiden Aktuatorlängsachsen Z10, Z20 erstrecken sich parallel zueinander und auch parallel zur Dämpferlängsachse Z2. Die beiden Aktuatorlängsachsen Z10, Z20 sind zudem beide bezüglich der Dämpferlängsachse Z2 radial versetzt angeordnet. Die Aktuatoren 10, 20 sind radial benachbart bezüglich des Dämpfers 102 platziert.

Die beiden Aktuatorlängsachsen Z10, Z20 und die Dämpferlängsachse Z2 spannen im Querschnitt ein Dreieck D auf. Die beiden Dreiecksseiten zwischen jeweils einer Dämpferlängsachse Z10 bzw. Z20 und der Aktuatorlängsachse Z2 schließen miteinander einen Winkel W im Bereich von 179° bis 160° ein. Der Reifen 300 und die Felge 304 liegen dem Dreieck D diametral bezüglich der Dämpferlängsachse Z2 gegenüber.

Die beiden Aktuatoren 10, 20 sind hydraulische Aktuatoren und strukturell identisch. Bei den beiden Aktuatoren 10, 20 ist jeweils mittels eines Balgs 13, 23 ein volumenvariabler Fluidraum 19, 29 geschaffen, welcher die Ansteuerung einer definierten Zielhöhe H ermöglicht. Jeder der beiden Aktuatoren 10, 20 weist ein separates Gehäuse 11, 21 auf, welches zum größten Teil durch das Stützrohr 16, 26 gebildet wird, wobei die Gehäuse 11, 21 einen Radialabstand R zueinander aufweisen. Die beiden Gehäuse 11, 21 bilden einen Zwischenraum aus. Im Zwischenraum ist der Dämpfer 102 angeordnet. Der Dämpfer 102 ist daher neben den Aktuatoren 10, 20 vorbeigeführt, anstatt durch einen bekannten und einzigen Aktuator hindurchgeführt zu sein, der den Dämpfer dann außenumfangsseitig umgibt.

Die beiden Aktuatoren 10, 20 sind parallelgeschaltet, wobei dies in der gezeigten Ausführung konstruktiv vermittels einer Fixierplatte 4 und einer Verstellplatte 6 erwirkt ist. Zwischen den Platten 4, 6 sind die Aktuatoren 10, 20 angeordnet und dadurch zwangsgekoppelt.

Die beiden Aktuatoren 10, 20 sind einends mit der gemeinsamen Fixierplatte 4 der Fußpunktverstelleinrichtung 2 verbunden. Die beiden Aktuatoren 10, 20 stützen sich gegen die Fixierplatte 4 ab. Die Fixierplatte 4 ist am Dämpfer 102 fest und auch gegen Rotation fixiert.

Die beiden Aktuatoren 10, 20 sind anderenends mit der gemeinsamen Verstellplatte 6 der Fußpunktverstelleinrichtung 2 verbunden. Die beiden Aktuatoren 10, 20 stützen sich gegen die Verstellplatte 6 ab. Die Verstellplatte 6 ist am Dämpfer 102 entlang der Dämpferlängsachse Z2 verstellbar geführt.

Die Verstellplatte 6 ist fest mit dem Federteller 104 via einer Verstellhülse 9 verbunden. Die Verstellung der Verstellplatte 6 in die Zielhöhe Z durch die Aktuatoren 10, 20 verstellt dann auch unmittelbar den Federteller 104 entsprechend. Die Verstellplatte 6 umfasst ein Gleitmittel 7, welches die Verstellplatte 6 am Dämpfer 102 entlang der Dämpferlängsachse Z2 gleitend lagert. Das Gleitmittel 7 ist in einem Zylinderabschnitt der Verstellplatte 6 angeordnet.

Jeder der beiden Aktuatoren 10, 20 weist jeweils eine Anbindungsplatte 12, 22 auf. Die Anbindungsplatten 12, 22 sind an der Verstellplatte 6 befestigt und damit verstellbar.

Jeder Aktuator 10, 20 umfasst einen einzigen Balg 13, 23, der als Rollbalg ausgestaltet ist. Jeder Balg 13, 23 begrenzt einen Fluidraum 19, 29 innen- und außenumfangsseitig. Der Fluidraum 19, 29 ist jeweils begrenzt ausschließlich von der Anbindungsplatte 12, 22, einem Abrollkolben 17, 27 und dem Balg 13, 23. Jeder Balg 13, 23 ist einends vermittels einer ersten Balgbefestigung 133, 233 an der Anbindungsplatte 12, 22 und anderenends vermittels einer zweiten Balgbefestigung 134, 234 am Abrollkolben 17, 27 befestigt. Jeder Balg 13, 23 bildet eine Rollfalte 131, 231 und eine stationäre Falte 132, 232 aus.

Die stationäre Falte 132, 232 des Balgs 13, 23 ist außenumfangsseitig um die erste Balgbefestigung 133, 233 herum angeordnet. Außenumfangsseitig der ersten Befestigung 133, 233 ist daher der Fluidraum 19, 29 angeordnet, sodass der Innendruck des Fluidraums 19, 29 auf die erste Befestigung 133, 233 drückt. Jeder Balg 13, 23 ist außenumfangseitig durch das jeweilige Stützrohr 16, 26 gestützt. Das Stützrohr 16, 26 ist an der entsprechenden Anbindungsplatte 12, 22 befestigt und damit verstellbar.

Ein Faltensitz 121, 221 je Aktuator 10, 20 ist von der jeweiligen Anbindungsplatte 12, 22 ausgebildet. Am Faltensitz 121, 221 liegt die stationäre Falte 132, 232 an. Der Faltensitz 121, 221 umfasst eine gewölbte Ringfläche, die bezogen auf die jeweilige Aktuatorlängsachse Z10, Z20 innenradial von der ersten Balgbefestigung 133, 233 und außenradial vom Kontaktende zwischen stationärer Falte 132, 232 und Anbindungsplatte 12, 22 begrenzt ist.

Jeder der beiden Aktuatoren 10, 20 umfasst den jeweiligen Abrollkolben 17, 27, auf dem der jeweilige Balg 13, 23 via seiner Rollfalte 131, 231 abrollt. Jeder Abrollkolben 17, 27 weist einen Bauchabschnitt 171, 271 auf, dessen Außendurchmesser in einem Bereich, der entlang der jeweiligen Aktuatorlängsachse Z10, Z20 benachbart zur Rollfalte 131, 231 des entsprechenden Balgs 12, 23 verortet ist, größer ist als der Zenit der Rollfalte 131, 231. Der jeweilige Abrollkolben 17, 27 bildet mit dem entsprechenden Stützrohr 16, 26 eine Gleitlagerung aus, wobei eine Spielpassung vorhanden ist. Das Stützrohr 16, 26 weist ein freies Ende 161, 162 auf, welches am Bauchabschnitt 171, 271 gleitgelagert ist.

Jeder Abrollkolben 17, 27 bildet einen Endanschlag 8 aus, jeweils umfassend Anschlagsflächen 122, 172, 222, 272 von Abrollkolben 17, 27 und Anbindungsplatte 12, 22 Bei Kontakt der Anschlagsflächen 122, 222, 172, 272 können die Abrollkolben 17, 27 zumindest teilweise in die Stützrohre 16, 26 einragen, wobei sich ein Abstand von höchstens 10 mm einstellt.

Jeder der beiden Aktuatoren 10, 20 kann ein Ventil oder einen Schlauchanschluss 18, 28 zum Be- und Entfüllen des jeweiligen Fluidraums 19, 29 umfassen. Das Ventil oder der Schlauchanschluss 18, 28 ist fest an der Fixierplatte 4 befestigt, die ihrerseits fest am Dämpfer und in relativer Ruhe zum Radträger fixiert ist.

Eine Anordnung 200 umfasst die Fußpunktverstelleinrichtung 2, den Reifen 300 mit seiner Seitenwand 302, die der Fußpunktverstelleinrichtung 2 zugewandt ist, und die Felge 304. Die beiden Aktuatoren 10, 20 sind radial benachbart zur Seitenwand 302 und/oder zur Felge 304 angeordnet. Die beiden Aktuatoren 10, 20 weisen jeweils einen Radialfreiraum F zur Seitenwand 302 und/oder Felge 304 von mindestens 10 mm auf. Auch der Dämpfer 100 weist einen Radialfreiraum F zur Seitenwand 302 und/oder Felge 304 von mindestens 10 mm auf. Vorliegend sind due Radialfreiräume F identisch. Das Rad hat eine Lenkachse A um welches es gelenkt wird, sowie eine Drehachse B, um welches es abrollt.

Die Fußpunktverstelleinrichtung 2 ist zur einen Seite eines Federtellers 104 angeordnet und die Feder 106 ist zur anderen Seite des Federtellers 104 angeordnet sein. Die Fußpunktverstelleinrichtung 2 ist unterhalb des Federtellers 104 und in Horizontalrichtung neben dem Reifen 300 und/oder der Felge 304 (jeweils bezogen auf eine Einbaulage im Kraftfahrzeug) bauraumsparend angeordnet.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 2 | Fußpunktverstelleinrichtung | A | Lenkachse |
| 4 | Fixierplatte | B | Drehachse |
| 6 | Verstellplatte | D | Dreieck |
| 7 | Gleitmittel | F | Radialfreiraum |
| 8 | Endanschlag | H | Zielhöhe |
| 9 | Verstellhülse | R | Radialabstand |
| | | W | Winkel |
| 10 | Aktuator | Z2 | Dämpferlängsachse |
| 11 | Gehäuse | Z10 | Aktuatorlängsachse |
| 12 | Anbindungsplatte | Z20 | Aktuatorlängsachse |
| 121 | Faltensitz | | |
| 122 | Anschlagsfläche | | |
| 13 | Balg | | |
| 131 | Rollfalte | | |
| 132 | stationäre Falte | | |
| 133 | (erste) Befestigung | | |
| 134 | (zweite) Befestigung | | |
| 16 | Stützrohr | | |
| 161 | freies Ende | | |
| 17 | Abrollkolben | | |
| 171 | Bauchabschnitt | | |
| 172 | Anschlagsfläche | | |
| 18 | Ventil | | |
| 19 | Fluidraum | | |
| 20 | Aktuator | | |
| 21 | Gehäuse | | |
| 22 | Anbindungsplatte | | |
| 221 | Faltensitz | | |
| 222 | Anschlagsfläche | | |
| 23 | Balg | | |
| 231 | Rollfalte | | |
| 232 | stationäre Falte | | |
| 233 | (erste) Befestigung | | |
| 234 | (zweite) Befestigung | | |
| 26 | Stützrohr | | |
| 261 | freies Ende | | |
| 27 | Abrollkolben | | |
| 271 | Bauchabschnitt | | |
| 272 | Anschlagsfläche | | |
| 28 | Ventil | | |
| 29 | Fluidraum | | |
| 100 | Federbein | | |
| 102 | Dämpfer | | |
| 104 | Federteller | | |
| 106 | Feder | | |
| 108 | Federbeindom | | |
| 110 | Radträger | | |
| 200 | Anordnung | | |
| 300 | Reifen | | |
| 302 | Seitenwand | | |
| 304 | Felge | | |
| 306 | Lauffläche | | |

## Patentansprüche

1. Fußpunktverstelleinrichtung (2), die von einer Dämpferlängsachse (Z2) durchsetzbar ist, umfassend einen ersten Aktuator (10) mit einer ersten Aktuatorlängsachse (Z10) und einen zweiten Aktuator (20) mit einer zweiten Aktuatorlängsachse (Z20).

2. Fußpunktverstelleinrichtung (2) nach Anspruch 1, **dadurch gekennzeichnet, dass** die beiden Aktuatorlängsachsen (Z10, Z20) parallel zueinander angeordnet sind.

3. Fußpunktverstelleinrichtung (2) nach einem der voranstehenden Ansprüche, **dadurch gekennzeichnet, dass** die beiden Aktuatoren (10, 20) einen Radialabstand (R) zueinander aufweisen.

4. Fußpunktverstelleinrichtung (2) nach einem der voranstehenden Ansprüche, **dadurch gekennzeichnet, dass** die beiden Aktuatoren (10, 20) mit einer Fixierplatte (4) verbunden sind, vorzugsweise ist die Fixierplatte (4) an einem Dämpfer (102) befestigt.

5. Fußpunktverstelleinrichtung (2) nach einem der voranstehenden Ansprüche, **dadurch gekennzeichnet, dass** die beiden Aktuatoren (10, 20) mit einer Verstellplatte (6) verbunden sind, vorzugsweise ist die Verstellplatte (6) an einem Dämpfer (102) entlang der Dämpferlängsachse (Z2) verstellbar geführt.

6. Fußpunktverstelleinrichtung (2) nach Anspruch 5, **dadurch gekennzeichnet, dass** an der Verstellplatte (6) für jeden der beiden Aktuatoren (10, 20) jeweils eine Anbindungsplatte (12, 22) befestigt ist.

7. Fußpunktverstelleinrichtung (2) nach einem der voranstehenden Ansprüche, **dadurch gekennzeichnet, dass** die beiden Aktuatoren (10, 20) strukturell identisch sind.

8. Fußpunktverstelleinrichtung (2) nach einem der voranstehenden Ansprüche, **dadurch gekennzeichnet, dass** jeder der beiden Aktuatoren (10, 20) jeweils einen Balg (13, 23) umfasst.

9. Fußpunktverstelleinrichtung (2) nach einem der voranstehenden Ansprüche, **dadurch gekennzeichnet, dass** jeder der beiden Aktuatoren (10, 20) jeweils ein Stützrohr (16, 26) umfasst, vorzugsweise ist der jeweilige Balg (13, 23) außenumfangseitig durch das jeweilige Stützrohr (16, 26) gestützt.

10. Fußpunktverstelleinrichtung (2) nach Anspruch 8 oder 9, **dadurch gekennzeichnet, dass** jeder der beiden Aktuatoren (10, 20) jeweils einen Abrollkolben (17, 27) umfasst, vorzugsweise bildet der jeweilige Abrollkolben (17, 27) mit dem entsprechenden Stützrohr (16, 26) eine Gleitlagerung aus.

11. Fußpunktverstelleinrichtung (2) nach einem der voranstehenden Ansprüche, **dadurch gekennzeichnet, dass** die Fixierplatte (4) fest mit dem Dämpfer (102) verbunden ist.

12. Anordnung (200), umfassend
- eine Fußpunktverstelleinrichtung (2) gemäß einem der voranstehenden Ansprüche und
- einen Reifen (300) mit einer Seitenwand (302) und
- eine Felge (304), wobei
- die beiden Aktuatoren (10, 20) und der Dämpfer (100) radial benachbart zur Seitenwand (302) und/oder Felge (304) angeordnet sind, und
- jeweils einen Radialfreiraum (F) zur Seitenwand (302) und/oder Felge (304) von mindestens 10 mm, bevorzugt von mindestens 15 mm aufweisen.
